# EUROPEAN PATENT APPLICATION

(11) **EP 3 530 981 A1**
(43) Date of publication of application: **28.08.2019**
(21) Application number: 18205221.7
(22) Date of filing: 08.11.2018
(51) Int. Cl.: F16H 1/16, F16H 55/22, F16H 1/22

(54) **WORM GEAR SYSTEM**

(30) Priority: 08.11.2017 NO 20171773
(71) Applicant: Produktide AS, 3484 Holmsbu (NO)
(72) Inventor: Brun, Per-Morten Enersen, 3482 Tofte (NO)
(74) Representative: Oslo Patentkontor AS

(57) **Abstract**

A worm gear system including a first worm pinion (1) and a first and second worm wheel (2, 3) meshing with said first worm pinion (1) on opposing sides thereof, wherein the first worm wheel (2) is attached to a second worm pinion (4) and the second worm wheel (3) is attached to a third worm pinion (5), said second and third worm pinions (4, 5) being in mesh with an output worm wheel (6) on opposing sides thereof.

## Description

### Technical Field

The present invention regards a worm gear system, and more particularly a worm gear system comprising a balanced gear train with extreme gear reduction, capable of transforming high speed into high torque, high force and low speed.

### Background of the Invention

Worm gears have been used for a long time and within many areas. They are probably most commonly used in tuning instruments like guitars, basses, banjos and other string instruments, but worm gears are also found in the machinery of elevators due to their compact size and non-reversible properties, and in the differentials of vehicles such as Hummers, and in gates and conveyor belts.

Worm gears are also becoming more and more common in normal households because of their use in furniture drives. Furniture drives are used for adjusting the position of parts of furniture. They are e.g. used for adjusting the elevation and inclination of the head and the foot of a bed, but they can also be used for raising and lowering a table. Furniture drives typically use an electric motor and several sets of gears to transforms the rotation generated by the motor into a movement of a part of furniture. The rotation of the motor is converted by the gears into a movement of an arm, and the arm moves the furniture part. The electric motor usually spins very fast and in order to convert the fast spin into a controlled, slow-motion, powerful movement, several sets of gears are normally used. Depending on which type of furniture the drive is meant to move, there can be a single, a double or even more drives.

Traditional worm gears have several weaknesses. One of the main problems is that the power transmission is only applied on one side of the gearwheel. The result is that all the power is transmitted onto a small area of the gear system. Since all the power is transmitted to such a small area, less engaging torque can be transferred. This force is causing a skew load on both shafts, requiring a solid shaft suspension for holding the gear mesh together. The weaknesses of this principle gives a restricted choice of materials, requiring high strength and bigger dimensions to transfer the same torque as will be needed with the present invention. This means that traditional solutions have been costly to manufacture.

A further drawback with the prior art solutions is the fact that the motor is usually perpendicular to the set of gears. This is very space demanding. An even further drawback is that prior art solutions require a suspension point for the first worm pinion.

### Summary of the Invention

It is therefore an object of the present invention, as stated in the set of claims to overcome the problems mentioned above.

The present invention according to claim 1 uses a worm gear system including a first worm pinion and a first and second worm wheel meshing with said first worm pinion on opposing sides thereof, wherein the first worm wheel is attached to a second worm pinion and the second worm wheel is attached to a third worm pinion, said second and third worm pinions being in mesh with an output worm wheel on opposing sides thereof. The rotary motion from the worm pinion is applied equally to the two worm wheels and utilizes the area of the gear edge on both sides for power transmission. The result of this solution is that an increased amount of torque can be transmitted using the same materials compared to traditional worm gears.

Preferred embodiments of the invention appear from the associated dependent claims.

An additional gear rim can be added below each of the two worm wheels, having an opposite lead angle in order to compensate for the longitudinal forces generated in parallel with the axis of the worm wheels.

The advantage of this solution is that a smaller motor can be used to get the same amount of torque as earlier. This is because the ratio of exchange between the gears can be increased. This again allows for transferring a larger amount of torque to the same size worm gears as in a traditional worm gear set up.

In the present invention the motor and the gears is on the same axis. The benefit of having the motor and the gears on the same axis is that it saves space in the construction. Regular worm gear solutions, and especially when used in furniture drives tend to have the motor mounted perpendicular to the gears. This construction is very bulky and space demanding.

Also, with a better balancing of the power transmission, lighter and smaller components can be used in the gear system. And lighter and smaller gear components in combination with a smaller motor result is a lighter and smaller construction and a lighter and smaller construction means that worm gears can be used within new areas or make existing worm gear solutions more manageable.

### Brief Description of the Drawings

The invention will now be described in detail in reference to the appended drawings, wherein
Fig. 1 is a perspective view of a preferred embodiment of the present invention,
Fig. 2 is an exploded view of a preferred embodiment of the present invention in use in a furniture drive,
Fig. 3a is a perspective view of a control mechanism for measuring the movement of a trapeze pinion,
Fig. 3b is a detailed view of the control mechanism for measuring the movement of a trapeze pinion, and
Fig. 4 is a detailed view a worm pinion used in the invention

### Detailed Description

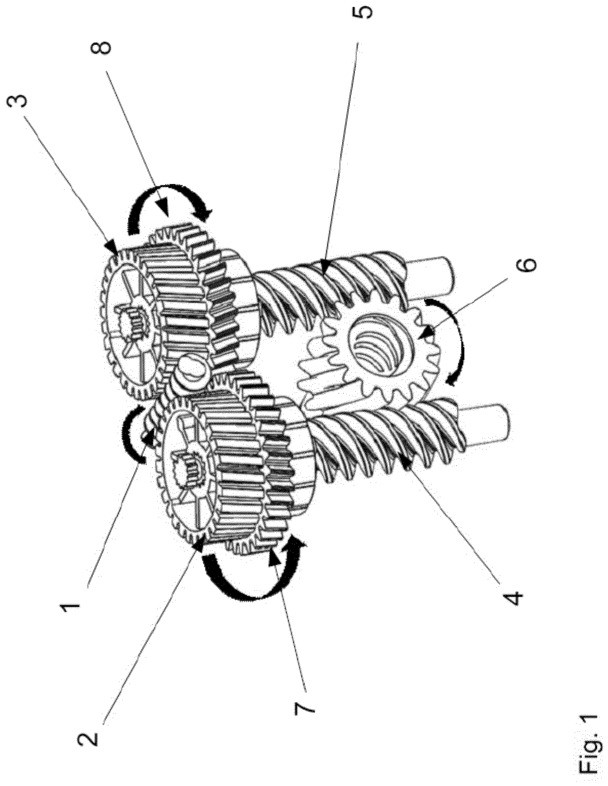

Fig. 1 is a perspective view of a preferred embodiment of the present invention This embodiment describes a two-step general gear reduction system.

The first gear step comprises a driving force rotating a first worm pinion 1. The first worm pinion 1 mesh with two worm wheels 2, 3 hereinafter called the first and the second worm wheel. These first and second worm wheels 2, 3 are placed on opposing sides of the first worm pinion 1.

The first and the second worm wheels 2, 3 mesh on opposing sides of the first worm pinion 1, the result is the worm wheels rotating in opposite directions.

Below each of the first and the second worm wheels 2, 3 there can be a gear rim 7, 8. The two gear rims 7, 8 mesh with each other.

The second gear step comprises a worm pinion 4, 5 attached to each of the first and the second worm wheels 2, 3, hereinafter called the second and the third worm pinion 4, 5. These second and third worm pinions 4, 5 continue along the axis of the first and the second worm wheels 2, 3 from the first gear step.

The second and third worm pinion 4, 5 mesh with an output worm wheel 6 that is placed between the second and the third worm pinion 4, 5.

The rotational force from the output worm wheel 6 can be transformed to e.g linear movement or angular movement.

Possible gear configurations can be single or multithreading of the pinions. Further globoid worm pinions can be used. Globoid worm pinions ensure a larger area of the worm pinion mesh with the worm wheels.

An even further adaption of the solution can be different gear tooth angels, different gear ratio and different pressure angles.

In a preferred embodiment, a drive force rotates the first worm pinion 1. The first worm pinion 1 can rotate in either direction. The worm first pinion 1 meshes with a first and the second gear wheel 2, 3. The first and the second gear wheel 2, 3 mesh on opposing sides of the first worm pinion 1. The forces on the first and second gear wheels 2, 3 are 180° phase shifted in relation to each other. By placing the first and the second gear wheels 2, 3 on opposing sides of the first worm pinion 1, the rotation of the first and the second gear wheels 2, 3 are in opposite directions. The movement of the first and the second gear wheels 2, 3 are transferred to the second and the third worm pinion shafts. The second and the third worm pinions 4, 5 on the second and the third worm pinion shafts rotate in opposite directions, resulting in the forces acting on the output worm wheel 6 in the second gear step are in opposite directions. The second and the third worm pinions 4, 5 mesh with the output worm gear 6. The movement of the second and the third worm pinions 4, 5 forces the output worm gear 6 to rotate in either direction depending on the rotating direction of the second and the third worm pinions 4, 5.

The torque and the speed of the worm pinions 1, 4, 5 and the worm gears 2, 3, 6 can be adjusted by changing the thread pitch and the number of threaded inputs on the pinion (and/or) in combination with changing the diameter and number of teeth on the gears and the pinions.

The maximum force and torque transmitted between the worm pinions and the worm wheels in the two gear steps can be increased further by using a globoid drive since the power can be distributed on even more teeth.

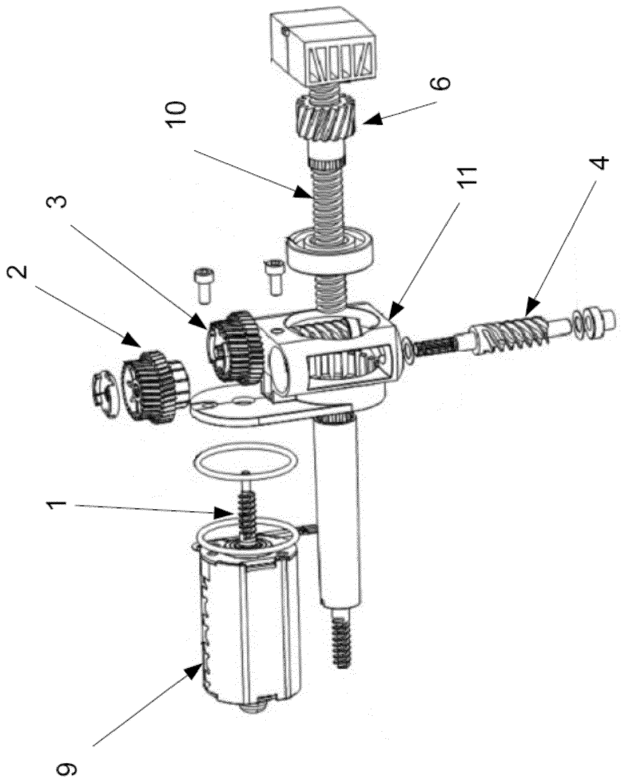

Fig. 2 is an exploded view of a preferred embodiment of the present invention in use in a furniture drive. An electric DC motor 9 comprises a stator and a rotor. The electric motor in this embodiment represents the drive force mentioned in figure 1. The rotor is directly attached to a first worm pinion 1. The first worm pinion 1 mesh with a first and a second gear wheel 2, 3. The first and the second gear wheel 2, 3 mesh on opposing sides of the first worm pinion 1. Each of the first and the second gear 2, 3 wheels is attached to a worm pinion 4, 5, hereinafter called the second and the third worm pinions 4, 5, with a worm wheel pinion lock locking each worm pinion to its respective worm wheel. Each of the second and the third worm pinons 4, 5 mesh on opposing sides of an output worm wheel 6. The output worm wheel 6 and the second and the third worm pinions 4, 5 are placed inside a gear housing 11. The gear housing 11 allows the output worm wheel 6 and the second and the third worm pinions 4, 5 to rotate, but restricts them from moving back and forth. The output worm wheel 6 has a threaded center boring (shown on Fig. 1). The worm wheel is connected to a correspo0ndingly threaded push rod 10. The threads on the push rod and in the internal boring may be trapezoid. The push rod 10 moves along a longitudinal direction when the drive motor 9 is switched on. The travel direction depends on the rotation direction of the output worm wheel 6. The push rod 10 is terminated in a bracket 12 connecting the gear system to the furniture part (not shown). Thus, the rotational movement of the drive motor 9 is converted to a linear movement acting on the furniture part.

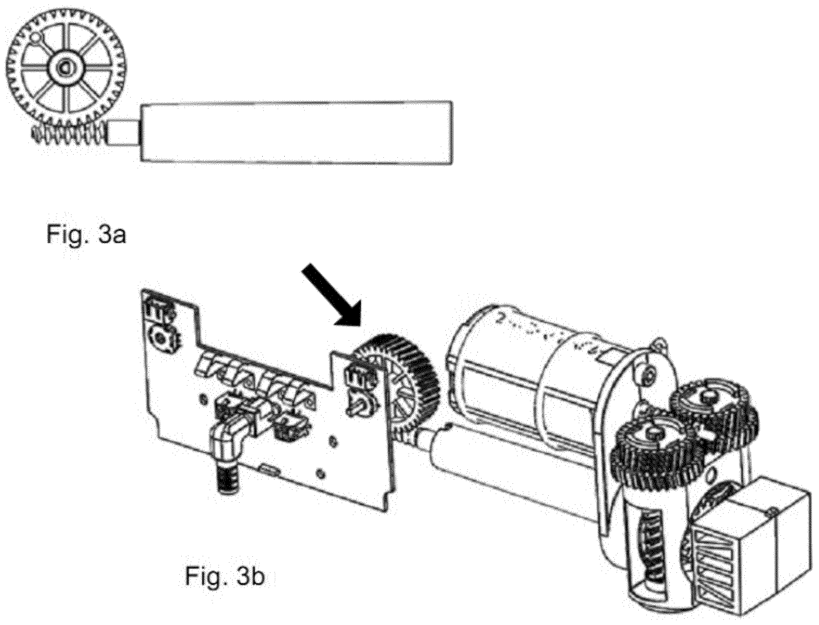

The output worm wheel 6 is connected to a bushing 13 terminated in a spline or cog wheel shaped part 14. The output worm wheel 6 is mounted in the gear housing 11 with a bearing 15. The bushing 13 is press-fit into the bearing 15, with the spline part 14 projecting outside the housing 11. The spline part 14 is engaging the open end 17 of a tubular stroke length carrier 16. The end of the stroke length carrier is internally shaped to fit the spline part 14. The push rod 10 will travel back and forth inside the stroke length carrier 16. The other end of stroke length carrier 16 is closed and terminated in a fourth worm pinion 18. The fourth worm pinion is connected to a mechanism for determining the position of the push rod 10, or rather the bracket 12, as shown in Fig. 3a and 3b.

Fig. 3a and 3b is a perspective view and a detailed view of a control mechanism for measuring the stroke length, or in another application, the angle of the output worm wheel 6.

As shown in Fig. 3a and 3b, the fourth worm pinion 18 is in mesh with a measurement worm wheel 19. The measurement worm wheel 19 is connected to an angular sensor 21, such as a potentiometer or rotary encoder mounted on a circuit board 20. This solution enables the accurate position of the push rod to be read out. Prior art solutions use end switches to read the end positions of the push rod only.

The second and third worm pinions 4, 5 may experience some transverse forces in use. In order to keep the production cost low, such components may be moulded in plastic to avoid using metal parts that have to machined. However, to provide necessary strength to the worm pinions, they are preferable made of a plastic material with a steel core. This is shown in Fig. 4 where the moulded worm pinion includes a central boring 22 for accepting a core 23 of a harder material, such as a metal or keramic.

It is emphasized that the figures 1, 2 and 3a, 3b show alternate views of one and the same embodiment of the invention. Thus, a feature described when considering one figure, will also apply to the other figures.

## Claims

1. A worm gear system including a first worm pinion (1) and a first and second worm wheel (2, 3) meshing with said first worm pinion (1) on opposing sides thereof, wherein the first worm wheel (2) is attached to a second worm pinion (4) and the second worm wheel (3) is attached to a third worm pinion (5), said second and third worm pinions (4, 5) being in mesh with an output worm wheel (6) on opposing sides thereof.

2. A worm gear system according to claim 1, wherein the worm pinions (1, 4, 5) are globoid worm pinions.

3. A worm gear system according to claim 1, wherein said first and second worm wheels (2, 3) include gear rims (7, 8) in mesh with each other.

4. A worm gear system according to claim 1, wherein said output worm wheel (6) includes an internally threaded center boring, the output worm wheel being mounted onto a correspondingly externally threaded push rod (10), wherein a rotational movement of the output worm wheel (6) will induce a longitudinal movement of the push rod (10).

5. A worm gear system according to claim 4, wherein the internal thread of the output worm wheel (6) and the external threads of the push rod (10) are trapezoid.

6. A worm gear system according to claim 4 or 5, wherein the output worm wheel (6) is connected to a stroke length carrier (16) in one end, the stroke length carrier (16) being tubular and surrounding the push rod (10).

7. A worm gear system according to claim 6, wherein the stroke length carrier (16) is connected to a fourth worm pinion (18), the fourth worm pinion (18) being in mesh with a measurement worm wheel (19), the measurement worm wheel (19) being connected to an angular sensor (21) for indicating the linear position of the push rod (10).

8. A worm gear system according to any of the previous claims, wherein at least the second and third worm pinions (4, 5) are made of a plastic material (22) with a core (23) made of a harder material.
